# EUROPEAN PATENT SPECIFICATION

(11) **EP 3 147 262 B1**
(45) Date of publication and mention of the grant of the patent: **04.03.2020**
(21) Application number: 15186419.6
(22) Date of filing: 23.09.2015
(51) Int. Cl.: C01G 45/00, C01G 45/12

(54) **A PEROVSKITE-BASED OXIDE FOR OXYGEN STORAGE AND A METHOD FOR PREPARATION THEREOF**
PEROWSKITBASIERTES OXID ZUR SAUERSTOFFLAGERUNG UND VERFAHREN ZUR HERSTELLUNG DAVON
OXYDE À BASE DE PÉROVSKITE DE STOCKAGE D'OXYGÈNE ET PROCÉDÉ POUR LEUR PRÉPARATION

(30) Priority: 22.09.2015 PL 41404315
(43) Date of publication of application: 29.03.2017
(73) Proprietor: Akademia Gorniczo-Hutnicza im. Stanislawa Staszica w Krakowie, 30-059 Krakow (PL)
(72) Inventor: Swierczek, Konrad, 30-530 Krakow (PL); Klimkowicz, Alicja, 30-236 Krakow (PL); Takasaki, Akito, Minuma-ku, Saitama 337-0033 (JP); Zheng, Kun, 31-216 Krakow (PL); Yamazaki, Tetsuya, Ishioka-si, Ibaraki 315-0111 (JP)
(74) Representative: Kancelaria Eupatent.pl Sp. z.o.o

(56) References cited:
- WO-A1-00/03947
- JP-A- 2011 016 684
- TRUKHANOV S V ET AL: "MAGNETIC AND ELECTRICAL PROPERTIES OF LBaMn2O6-[gamma] (L=Pr, Nd, Sm, Eu, Gd, Tb) MANGANITES", PHYSICAL REVIEW, B. CONDENSED MATTER, AMERICAN INSTITUTE OF PHYSICS. NEW YORK, US, vol. 66, no. 66, 184424, 1 November 2002 (2002-11-01), pages 1-10, XP001140931, ISSN: 0163-1829, DOI: 10.1103/PHYSREVB.66.184424
- A. KLIMKOWICZ ET AL.: "Crystal structure and oxygen storage properties of BaLnMn 0 , (Ln: Pr, Nd, Sm, Gd, Dy, Er and Y) oxides", MATERIALS RESEARCH BULLETIN, vol. 65, 2015, pages 116-122, XP002760029,
- A. KLIMKOWICZ, ET AL.: "Evaluation of BaY1 - xPrxMn2O5 + delta oxides for oxygen storage technology", SOLID STATE IONICS, vol. 262, 2014, pages 659-663, XP002760030,

## Description

### TECHNICAL FIELD

The present invention relates to perovskite-based oxide compounds for use as oxygen storage materials in various applications. In particular, it relates to applications in a three-way catalytic converters used in exhaust systems of vehicles powered by internal combustion engines to oxidize hydrocarbons, carbon monoxide and reduce nitrogen oxides in exhaust gas when the engine is operated. In another typical application it relates to usage in various systems where control of the oxygen partial pressure in the surrounding atmosphere is of importance. The invention further relates to a method for preparation of perovskite-based oxide compounds having enhanced properties of oxygen reversible absorption (incorporation) and release.

### BACKGROUND

Perovskite materials have been increasingly researched for their possible use in various applications as oxygen storage materials (OSM), due to their reversible oxygen storage/release properties at elevated temperatures. So far, such oxygen storage materials have been commercially used or considered for usage (with laboratory-scale initial results), for example, in air separation technology, solar water splitting, non-aerobic oxidation including flameless combustion of hydrocarbons, high-temperature production that requires high-purity oxygen, oxy-fuel and chemical looping combustion processes used in clean coal-type energy production, as well as production of synthesis gas.

In particular, oxygen storage materials are already utilized in automotive industry in three-way catalysts, named also as three-way catalytic converters (the OSM act there as an oxygen reservoir). The main three reactions which can be catalyzed in these converters by the OSM material involve: reduction of nitrogen oxides to nitrogen and oxygen, oxidation of carbon monoxide to carbon dioxide, and oxidation of unburned hydrocarbons to CO₂ and water. All of these reactions are efficiently catalyzed when the air to fuel ratio (supplied to the engine) is near stoichiometric one. Nonetheless, under excess of fuel, which occurs for instance in case of rapid acceleration of a vehicle, not enough oxygen is available in the exhaust gases stream for the oxidation reactions to proceed effectively. At this point, the oxygen is released from an OSM material, which therefore can be described as auxiliary catalyst. Oxygen storage capacity (OSC) of the oxygen storage material is, therefore, one of the main indicators of quality of such catalyst. Under lean conditions (excess of air) depleted OSM will adsorb oxygen back, and will help to catalyze the decomposition of NOₓ. Another important parameter is related to an ability for a fast release of the oxygen.

The currently known OSM materials are mixed oxides - from ceria-zirconia (CeO₂-ZrO₂) or ceria-lanthana (CeO₂-Ln₂O₃) (where Ln is an element selected from Lanthanides) or other materials based e.g. on Bi₄V₂O₁₁, as well as YBa₂Cu₃O_{6+δ}.

There are also known commercially applicable solid solution-type oxide materials having the chemical formula: Ce₁₋ₓZrₓO_{2-δ} (where δ denotes the value of the oxygen non-stoichiometry) that show reversible oxygen absorption at a temperature of approximately 500°C and have the OSC in the range of 400-500µmol-O/g, in an atmosphere comprising oxygen, or even in the range of approximately 1500µmol-O/g, in a reducing atmosphere of 20vol.% of H₂. It is also possible to increase the OSC value up to the value of 2500 µmol-O/g at a temperature of 550 to 700°C, but it requires presence of toxic Cr⁶⁺ ions.

Several techniques have been used to produce perovskite-type catalyst materials that may be used as oxygen storage materials (OSM), which show three-way-type catalytic properties, i.e. activity towards carbon monoxide oxidation, hydrocarbons oxidation and nitrogen oxides reduction.

The chemical basis for the reversible oxygen storage-related properties of the cerium-based materials rely upon the following reaction:

Ce⁴⁺1₋ₓZr⁴⁺ₓO₂ ↔ Ce⁴⁺_{1-x-y}Ce³⁺_{y}Zr⁴⁺ₓO_{2-y/2} + y/4O₂

At low oxygen partial pressure (excess of fuel), the above reaction is shifted to the right. In oxidizing atmospheres (excess of air), it is shifted to the left. This reaction utilizes ability of cerium for a reversible change of its oxidation state in the fluorite-type structure (Ce⁴⁺-Ce³⁺).

T. Motohashi et al. ("Remarkable Oxygen Intake/Release Capability of BaYMn2O5+δ Applications to Oxygen Storage Technologies" Chemistry of Materials, 22 (2010) 3192-3196), K. Świerczek et al. ("Synthesis, crystal structure and electrical properties of A-site cation ordered BaErMn2O5 and BaErMn2O6" Journal of Solid State Chemistry 203 (2013) 68-73), A. Klimkowicz et al. ("Evaluation of BaY1-xPrxMn2O5+δ oxides for oxygen storage technology' Solid State Ionics 262 (2014) 659-663) and M. Gilleßen et al. ("Oxygen-Storage Materials BaYMn2O5+δ from the Quantum-Chemical Point of View" Chemistry of Materials 24(10) (2012) 1910-1916) describe oxides of a structure: BaLnMa₂O_{5+δ} (where Ln is at least one of elements selected from Lanthanides) that may be utilized as an oxygen storage materials.

BaLnMa₂O_{5+δ} compounds are capable of reversible absorption of 1 mol of oxygen (from BaLnMa₂O₅ to BaLnMa₂O₆). The theoretical capacity of the material (defined as a ratio of the molar mass of the oxidized and reduced material) amounts to 3.85% by weight if Ln = Y (yttrium), wherein the practical capacity of the material amounts to 3.7% at the temperature of 500°C, under change in the atmosphere from air into 5 vol.% of H₂ in Ar. The material can be utilized at lower temperatures of approximately 400°C showing sufficiently fast change in the oxygen content (oxygen non-stoichiometry - δ). The thermal effect associated with the oxygen incorporation and release is measurable. Moreover, the DCS studies on this material show that the heat of its combustion (incorporation of about 1mol of oxygen) equals approximately 200 kJ/mol.

R.H. Mitchel in "Perovskites modern and ancient" (Almaz Press INC., Canada 2000) and G. King et al. ("Cation ordering in perovskites" Journal of Materials Chemistry, 20 (2010) 5785-5796) describe that BaLnMn₂O₅ (reduced) and BaLnMn₂O₆ (oxidized) belong to the family of double perovskites with layered-type order of cations in the A sublattice (i.e. Ba-Ln, e.g. Ba-Y), wherein the crystal structure may be derived from the simple perovskite-one of the general formula of ABO₃. The dependence between the ionic radius and/or the valence of the cations that take place in the A or B sublattice constitutes the cause of the ordering of the cations. BaLnMn₂O₅ and BaYLnn₂O₆ show the ratio of the amount of cations present in A-sublattice of 1:1. This cations create the order in the form of alternating layers of octahedrons associated with Ba and Ln. In case of such an ordering the tetragonal structure constitutes the base crystal structure, that shows doubling of the elementary unit cell of the simple perovskite along the c-axis. The reversible oxygen-storage ability of BaLnMn₂O_{5+δ} (e.g. BaYMn₂O_{5+δ}) is caused by possibility of occupancy of oxygen vacancies that are associated with the Ln-related layer in the reduced material by the oxygen anions. Consequently, oxygen can be easily introduced and lead out of the lattice structure, which is associated by changes of the formal oxidation state on Mn cations from +2.5 (for BaLnMn₂O₅) to +3.5 (for BaLnMn₂O₆)

A. Klimkowicz et al. in "Crystal structure and oxygen storage properties of BaLnMn2O5+δ (Ln: Pr, Nd, Sm, Gd, Dy, Er and Y) oxides" (Materials Research Bulletin 65 (2015) 116-122) describes perovskite-based materials of chemical formula: BaLnMn₂O_{5+δ} were Ln is selected from the group consisting of: Pr, Nd, Sm, Gd, Dy, Er and Y. The perovskite BaLnMn₂O_{5+δ} belongs to a family of A-site cation ordered BaLnMn₂O_{5+δ} manganites with layer-type ordering, for which the crystal structure can be derived from structure of the simple perovskite. The method of synthesis of BaLnMn₂O_{5+δ} consists in dissolving of nitrates of respective elements in a small amount of deionized water, in stoichiometric proportions, adding the ammonia salt of ethylenediaminetetraacetic acid (EDTA) into the solution, followed by heating of the obtained mixture in air up to 400°C to evaporate water, decompose excessive nitrates and oxidize carbon residues. Next, the obtained material: precursor of BaLnMn₂O_{5+δ} is thoroughly ground and pressed into pellets, and the pellets are annealed at temperature of 1000-1100°C in an atmosphere of 1vol.% of H₂ in Ar with flow of a gas mixture. The obtained BaLnMn₂O_{5+δ} materials shows good OSM properties.

A. Klimkowicz et al. in "Modification of BaYMn2O5+δ perovskite in an aspect of development of oxygen storage technology in perovskite oxides" (CHEMIK 67 (12) (2013) 1199-1206) describes perovskite-based materials of the chemical formula: BaY₁₋ₓGdₓMn₂O_{5+δ}, (wherein x = 0 or 0.25 or 0.5 or 0.75 or 1) that show improved oxygen storage properties. The method of synthesizing the materials is based on soft chemistry method and it involves dissolving the respective nitrates in deionized water in stoichiometric proportions, adding into the solution ammonia salt of EDTA, which serves as a complexing agent, heating the solution up to 400°C in air, to evaporate whole water content, decompose excessive nitrates and oxidize carbon residues, grinding the obtained perovskite precursors in an agate mortar and pressing the obtained powder into pellets. Following the pellets preparation, the perovskite precursors are annealed at 1100°C, for 8 hours, in atmosphere of 1vol.% of H₂ in Ar. The obtained perovskite-based materials with the chemical formula of BaY₁₋ₓGdₓMn₂O_{5+δ} show improved storage-related kinetics, which is accompanied by a decrease of the reversible capacity of the materials.

Moreover, A. Klimkowicz et al. in "Ceramic materials form the group of double perovskites based on BaYMn2O5+δ for oxygen storage technology / Materiaty ceramiczne z grupy perowskitów podwójnych na bazie BaYMn2O5+δ dla technologii magazynowania tlenu" (Materialy Ceramiczne /Ceramic Materials, 65(1) (2013) 92-96) describes perovskite-based materials of the chemical formula: BaY₁₋ₓSmₓMn₂O_{5+δ} (wherein x = 0.25 or 0.5 or 0.75 or 1) that exhibit a structure with layered arrangement of Ba-Y₁₋ₓSmₓ in the A-sublattice, wherein the reduced (δ ≈ 0) material crystallizes in tetragonal symmetry with P4/mmm space group, and triclinic P-1 structure is observed for the oxidized compositions with samarium (Sm) content of x ≤ 0.5. The method of synthesis of BaY₁₋ₓSmₓMn₂O_{5+δ} is based on soft chemistry synthesis and consists in dissolving the respective nitrates in deionized water in stoichiometric proportions, adding an ammonia salt of EDTA, which serves as a complexing agent, into the solution, heating the solution up to 400°C in air, to evaporate whole water content, decompose excessive nitrates and oxidize carbon residues, grinding the obtained perovskite precursors in an agate mortar, cooling of the obtained powder, and pressing the powder into pellets. Following the pellets preparation, the perovskite precursors are annealed at 1100°C, for 8 hours, in atmosphere of 1vol.% of H₂ in Ar. The obtained perovskites are single-phase materials and they show good oxygen storage-related kinetics.

A US patent application US20120118149 describes a ceramic material for selective storage and release of oxygen which constitutes a rare-earth manganese oxide which comprises metals: M1 selected form the group consisting of: In, Sc, Y, Dy, Ho, Er, Tm, Yb and Lu and optionally metals - M2 selected form the group consisting of: Bi, In, Sc, Y, La, Ce, Pr, Nd, Sm, Eu, Gd, Tb, Dy, Ho, Er, Tm, Yb and Lu. The method of synthesis and preparation of the material is based on solid state reaction and involves thoroughly mixing of the respective oxides in an agate mortar, firing the mixture air in the temperature range of 800-1200°C with intermediate grindings followed by pressing samples into high-density pellets. The obtained perovskite was additionally reduced in TG (thermogravimetric) apparatus which showed to have increased stability on reduction at δ = -0.12 and -0.20, thus, cycling to 400°C. in hydrogen to either thermal or oxygen partial-pressure cycling yielded an additional capacity of 450-1050µmol-O/g (for x = 0-1).

A Japan patent application JP2095119949 describes oxygen storage materials based on cerium oxide and zirconium oxide with oxides of yttrium, scandium, and other rare earth metals, of the OSC amounting to 54µmol-O/g at the temperature of 400°C.

A US patent application US20090206297 describes compounds of the formula: RBaCo₄O_{7+δ} (where R = Y, Dy, Ho, Er, Tm, Yb, Lu) and YBaCo₄-AlₓO_{7+δ} which are considered to show good OSC values of approximately 2700µmol-O/g at the temperature of 400-425°C. The OSC values among this group of OSM materials is associated with ability of reversible interphase transition between, e.g. YBaCo₄O₇ of the hexagonal structure: P63mc and YBaCo4O_{8.1} of orthorhombic structure: Pbc21 that comprises Co in a tetrahedral and an octahedral coordination.

As follows from the above referred scientific and patent literature, oxygen storage properties of double perovskite-type materials are under deep investigation, aiming to develop a material of better oxidation/reduction properties, which would provide good OSC within a wide range of temperature, as well as shorter reduction times (release of oxygen).

There is therefore a need for further development of oxygen storage capacity (OSC) of double perovskite-type materials based on rare-earth manganese oxides that could be used for example in three-way catalytic converters, showing improved OSC characteristics.

### SUMMARY

There is presented a method for preparation of a perovskite-based oxide of the chemical formula: BaLnMn₂O_{5+δ}, where Ln represents at least one element selected from the group consisting of: Ce, Pr, Nd, Pm, Sm, Eu, Gd, Tb, Dy, Ho, Er, Tm, Yb and Lu or a mixture of elements from the group consisting of: Ce, Pr, Nd, Pm, Sm, Eu, Gd, Tb, Dy, Ho, Er, Tm, Yb, Lu and Y, the method comprising synthesizing a perovskite precursor by a sol-gel method comprising the steps of: dissolving nitrates of respective elements in water, evaporating water to obtain a perovskite precursor, decompose excessive nitrates and oxidize carbon residues, grinding the perovskite precursor to a powdered perovskite precursor, annealing the powdered perovskite precursor in an atmosphere of 1vol.% of H₂ in Ar, at a temperature range from 1000 to 1100°C and cooling the obtained perovskite of the formula BaLaMn₂O_{5+δ}. The method further comprises the following steps: high energy milling of the obtained perovskite of the formula BaLaMn₂O_{5+δ} for 5 to 30 minutes, and activating of the material by consecutive isothermal oxidation/reduction at the temperature of 500°C in a reducing atmosphere of H₂ in Ar and in an oxidizing atmosphere of air.

Preferably, the method comprises milling of the obtained perovskite in a rotary vibrating ball mill operating with a clamp speed of 500-1000cpm (cycles per minute) or in a planetary mill rotating with a speed from 300rpm to 800rpm (revolutions per minute).

Preferably, the method comprises milling at the ratio of perovskite material to milling balls from 1:100 to 1:300.

Preferably, the milling chamber used in the mill has its interior made of ZrO₂.

Preferably, the method comprises carrying out the activation process in a thermogravimetric apparatus.

Preferably, the method comprises carrying out the activation for a multiple, preferably five, oxidation/reduction cycles.

There is also presented an oxygen storage perovskite-type metal oxide compound of a chemical formula: BaLnMn₂O_{5+δ}, where Ln represents at least one element selected from the group consisting of: Ce, Pr, Nd, Pm, Sm, Eu, Gd, Tb, Dy, Ho, Er, Tm, Yb and Lu or a mixture of elements from the group consisting of: Ce, Pr, Nd, Pm, Sm, Eu, Gd, Tb, Dy, Ho, Er, Tm, Yb, Lu and Y. The material is high energy milled for a time from 5min to 30min and activated by consecutive isothermal oxidation/reduction cycles at a temperature of 500°C in a reducing atmosphere of H₂ in Ar and in an oxidizing atmosphere of air.

### BRIEF DESCRIPTION OF THE DRAWINGS

The invention is presented by means of exemplary embodiments in a drawing, in which:
Fig. 1 represents an X-ray diffraction pattern of BaPrMn₂O₅, for initial material and after high energy milling, for different times of the high energy milling process;
Fig. 2A represents a diagram of dependence of normalized to simple perovskite (cubic ABO₃) unit cell parameters and crystallite size together, with respect to the time of high energy milling of reduced BaPrMn₂O₅;
Fig. 2B represents a diagram of dependence of normalized to simple perovskite (cubic ABO₃) unit cell parameters and crystallite size together, with respect to the time of high energy milling of reduced BaPrMn₂O₆;
Fig. 3A represents TG curves corresponding to the oxygen release from BaPrMn₂O₆ samples, for initial material and after high energy milling, taken in 5 vol.% of H₂ atmosphere at 500°C.
Fig. 3B represents TG curves corresponding to the oxygen release from BaPrMn₂O₆ samples, for initial material and after high energy milling, taken in 5 vol.% of H₂ atmosphere during heating from the room temperature to 500°C.
Fig. 3C represents TG curves corresponding to the oxygen incorporation to the structure of BaPrMn₂O₅ samples, for initial material and after high energy milling, taken in synthetic air atmosphere at 500°C.
Fig. 4 represents a table with collected data of BaPrMn₂O_{5+δ} oxidation/reduction properties (most important oxygen storage-related properties) calculated on the basis of the registered TG data. Reduction parameter r corresponds to a speed of reduction shown in [%w/w /min] units, calculated for 50% of the total capacity as described in T. Motohashi et al. ("Enhanced oxygen intake/release kinetics of BaYMn2O5+d fine powders prepared by a wet-chemical route", Journal of the Ceramics Society of Japan, 119 (2011) 894-897).
Fig. 5A represents TG curves corresponding to the oxygen release from BaSmMn₂O₆ samples, for initial material and after high energy milling, taken in 5 vol.% of H₂ atmosphere at 500°C.
Fig. 5B represents TG curves corresponding to the oxygen incorporation to the structure of BaSmMn₂O₅ samples, for initial material and after high energy milling, taken in synthetic air atmosphere at 500°C.
Fig. 6 represents a table with collected data of BaSmMn₂O_{5+δ} oxidation/ reduction properties (most important oxygen storage-related properties) calculated on the basis of the registered TG data. Reduction parameter r corresponds to a speed of reduction shown in [%w/w / min] units, calculated for 50% of the total capacity as described in T. Motohashi et al. ("Enhanced oxygen intake/release kinetics of BaYMn2O5+d fine powders prepared by a wet-chemical route", Journal of the Ceramics Society of Japan, 119 (2011) 894-897).

### DETAILED DESCRIPTION

The present invention pertains to an oxygen storage dual perovskite-type compound of chemical formula: BaLnMn₂O_{5+δ}, where Ln represents at least one element selected from the group consisting of: Ce, Pr, Nd, Pm, Sm, Eu, Gd, Tb, Dy, Ho, Er, Tm, Yb and Lu or a mixture of elements from the group consisting of: Ce, Pr, Nd, Pm, Sm, Eu, Gd, Tb, Dy, Ho, Er, Tm, Yb, Lu and Y. The material features increased oxygen storage capacity (OSC) and improved oxygen release speed, due to the introduced method of its treatment according to the present invention.

In general, the oxygen storage double perovskite-type metal oxide compound may be synthesized by using different suitable synthesis methods, e.g. soft chemistry method (sol-gel reaction) or by using solid state-type reaction method or by using other techniques suitable for synthesis of perovskite-type oxides.

The synthesis of the double perovskite of the formula BaLnMn₂O_{5+δ}, by using the soft chemistry method, may involve: dissolving nitrates or acetates or other water-soluble salts of respective elements in a small amount of deionized water, in stoichiometric proportions, and subsequently, adding, into the obtained solution, the ammonia salt of ethylenediaminetetraacetic acid (EDTA), due to its complexing properties, and next, heating the solution in a quartz evaporator in an atmosphere of air, at a temperature of approximately 400°C to evaporate water content. The heating process results in evaporation of water as well as a sol-gel transition, decomposition of the excessive ammonium nitrate, and finally oxidation of residual carbon that originates from EDTA. Then, perovskite precursor is obtained, which in the next step is thoroughly ground, e.g. in an agate mortar, in order to obtain precursor powder. Following the grinding process, the powder is pressed into pellets, preferably having a thickness of about 1mm, under pressure of about 100MPa. Next, the pellets are subjected to annealing, e.g. in a furnace, which, during the annealing, enables application of protective gas atmosphere, preferably of 1vol.% of H₂ in Ar with gas flow of approximately 100cm³/min, within the temperature range from 900°C to 1200°C and preferably at the temperature of 1100°C, with a heating rate of the furnace of about 3°/min. The annealing process is conducted till all the volume of the precursors reacts into the respective double perovskite compound of a general chemical formula: BaLnMn₂O_{5+δ}. Preferably, the annealing process is carried out for 6 to 12 hours, more preferably for 8 hours. After suitable annealing, the obtained double perovskite is slowly cooled in the furnace chamber with the maintained gas flow of protective gas atmosphere, preferably of 1vol.% of H₂ in Ar with gas flow of approximately 100cm³/min.

In the next step, the obtained perovskite, cooled to a room temperature, is subjected to an activation process, i.e. the high energy milling process, carried out for 5min to 30min, under air or under atmosphere of Ar, preferably at the room temperature. The milling is preferably performed in a conventional rotary vibrating ball mill, at the clamp speed from 500cpm to 1000cpm (cycles per minute), and preferably at the rotary speed of 875cpm or in a planetary ball mill, at the rotary speed from 300rpm to 800rpm (revolutions per minute), and preferably at the rotary speed of 500rpm. Preferably, the interior of the milling chamber used for milling is made from zirconium (IV) oxide: ZrO₂, due to its chemical inactivity, high hardness and fracture toughness. Suitable apparatus for carrying out the high energy milling process is a conventional milling equipment, such as for example: planetary ball mill Fritsch model P7 or rotary vibrating ball mill SPEX SamplePrep model Mixer/Mill 8000D.

Following the milling process, the perovskite is subjected to a cyclic activation which may involve heating of the perovskite up to the temperature from 400°C to 600°C, and preferably up to 500°C, with the heating rate of 10°C/min. The activation process involves consecutive isothermal oxidation and reduction of the perovskite under atmosphere of air and under atmosphere comprising hydrogen (H₂), respectively, in isothermal conditions, at the temperature of 500°C. Preferably, during the oxidation cycles synthetic air is used. However, during the reduction cycles, a reducing gas mixture is used, preferably 5vol.% of H₂ in Ar. The cyclic oxidation/reduction process may be carried out by a different suitable furnace that enables maintenance of the isothermal conditions as well as a rapid change of gas flow - from the air into the hydrogen-containing mixture and vice versa. Suitable apparatus for carrying out the cyclic oxidation/reduction process is a conventional thermogravimetric apparatus, such as for example: TA Instruments model Q5000IR or Linseis model STA PT 1600.

Preferably, suitable activation of milled perovskite material involves from 2 to 10 isothermal consecutive oxidation/reduction cycles, and more preferably, the activation process involves five isothermal consecutive oxidation/reduction cycles in the atmosphere of air and hydrogen-containing one (5vol.% H₂ in Ar), respectively.

It has been noticed that the high energy milling process conducted for the time of 5min to 30min provides partial or total distortion of the cation-ordering present in the Ba-Ln sublattice in BaLnMn₂O_{5+δ}, and also provides surface activation of the perovskite material and causes decrease of the grain size of the material, and therefore, the high energy milling enhances the oxygen storage properties of the BaLaMn₂O_{5+δ} material, particularly, characteristic temperature of reduction Tᵣ and speed of reduction defined by reduction rate parameter r described in T. Motohashi et al. ("Enhanced oxygen intake/release kinetics of BaYMn2O5+d fine powders prepared by a wet-chemical route", Journal of the Ceramics Society of Japan, 119 (2011) 894-897). It has been noticed that enhancement of OSC (oxygen storage capacity) is also possible by the described the high energy milling process.

In order to evaluate the OSC properties of the BaLaMn₂O_{5+δ} activated by the introduced high energy milling process, thermogravimetric (TG) studies were performed concerning the oxidation and the reduction properties, as well as X-ray diffraction studies of two materials: BaPrMn₂O_{5+δ} and BaSmMn₂O_{5+δ}.

BaPrMn₂O_{5+δ} was synthesized by using soft chemistry method. At the initial step, the stoichiometric amounts of respective nitrates, namely: 8.9081 g of Pr(NO₃)₃·6H₂O, 5.5828g of Ba(NO₃)₂ and 10.7243g of Mn(NO₃)₂·4H₂O, were mixed and dissolved in a small amount of deionized water. 28.7180g of EDTA was dissolved in 25% ammonia solution and added into the solution of nitrates. The obtained solution was heated in a quartz evaporator, in air, at the temperature of approximately 400°C, until all water content evaporated and the excess of ammonium nitrate decomposed, as well as residual carbon was oxidized. Next, the obtained perovskite precursor was transferred onto a mortar and ground, and subsequently, the powder was pressed into pellets of about 1mm thickness, under the pressure of 100MPa. In the next step, the precursor was subjected to the annealing, for 8 hours, at temperature of 1100°C, under the atmosphere of 1vol.% of H₂ in Ar, with a flow of gas of about 100cm³/min., in the furnace with a heating rate of 3°/min. After annealing, the obtained BaPrMn₂O_{5+δ} double perovskite was slowly cooled in the furnace to the room temperature. Next, the perovskite pellets were crumbled and sieved through sieve with aperture of 100 micrometers. Subsequently, the perovskite was split into five samples, where one sample was not subjected to the milling process (milling time = 0), and the remaining four samples were milled for the time of: 5, 10, 15 and 30 minutes, respectively. The high energy milling process was carried out in a planetary ball mill, with the rotary speed of 500rpm, under air, maintaining the weight ratio of the material to be milled and the milling balls of 1:100. Subsequently, the samples were transferred into the thermogravimetric (TG) apparatus and heated up to 500°C with the heating rate of 10°/min and subjected to the activation process involving five consecutive, isothermal oxidation/reduction cycles, at the temperature of 500°C, in the rapidly changing gas atmosphere: of 5vol.% of H₂ in Ar (during the reduction) and synthetic air (during the oxidation).

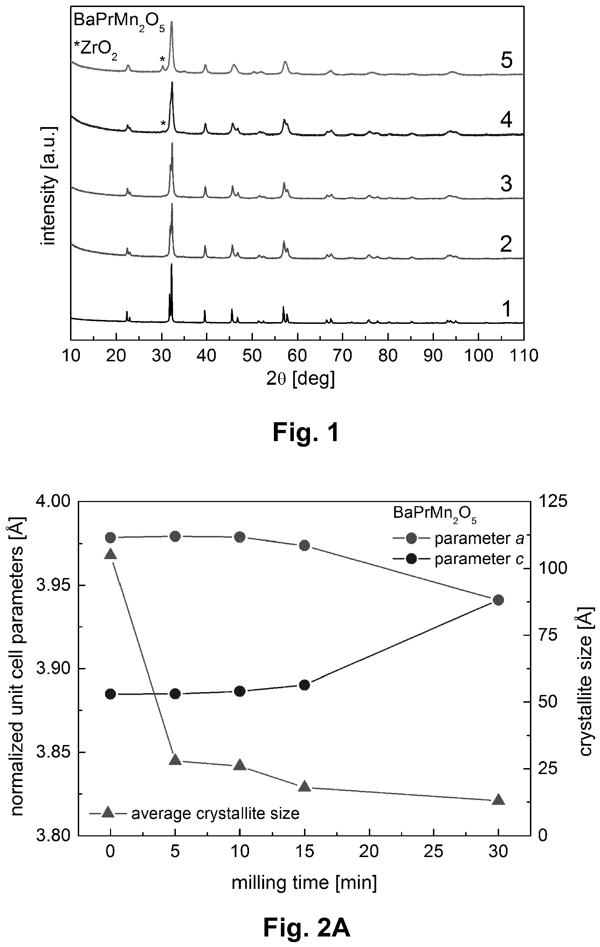

For the obtained samples of BaPrMn₂O₅, X-ray powder diffraction (XRD) measurements were performed, and the obtained diffraction patterns are shown in Fig. 1, wherein: 1 corresponds the reference sample (not milled), 2 - the sample milled for 5min, 3 - the sample milled for 10min, 4 - the sample milled for 15min, 5 - the sample milled for 30min. As observed by the broadening and overlapping of the X-ray reflexes, an ongoing process of cation mixing between Ba and Pr sites occur (complete cation disorder for the 30min milling time, as seen by presence of single main X-ray peak near 32 deg). Also, for longer milling times (15min and 30min) presence of small amount of ZrO₂ can be seen in the samples.

Fig. 2A is a diagram representing the dependence of normalized to unit cell of the simple cubic perovskite lattice parameters: *a, c* of BaPrMn₂O₅ (in reduced form) and the average crystallite size with respect to the time of the high energy milling. As follows from Fig. 2A, the sample milled for 30min shows a total disorder of the Ba-Pr sublattice (structure is transformed from tetragonal one (*a* ≠ *c*) to cubic one (*a* = *c*), whilst the samples milled for 5min, 10min, and 15min, show partial disorder of the Ba-La sublattice, which is visible as a reduction of *a*/*c* ratio, approaching 1.

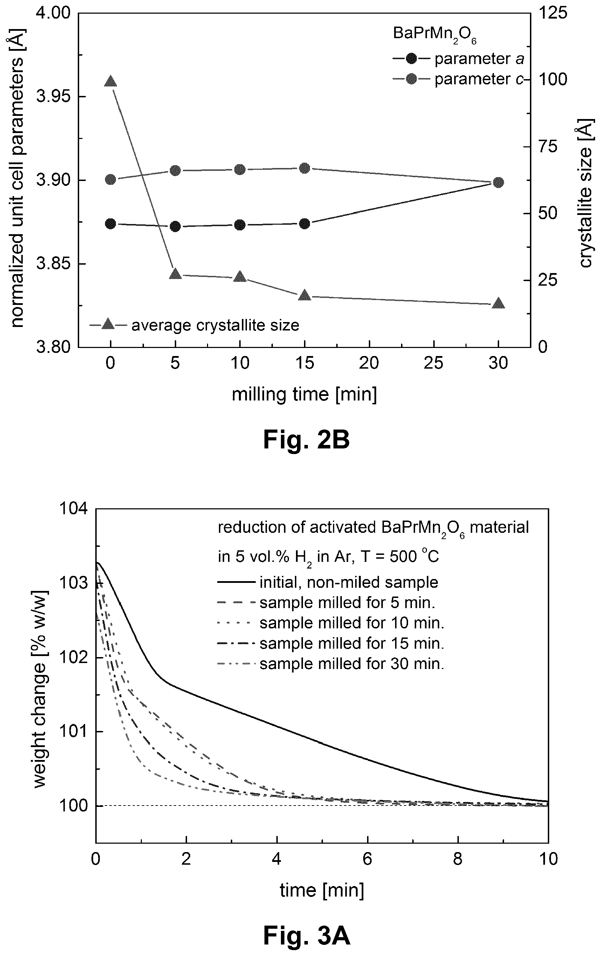

In order to compare the values of lattice parameters: a, c of the reduced form of the BaPrMn₂O₅ with the values: a, c of the oxidized form: BaPrMn₂O₆, the X-ray studies were performed for the oxidized BaPrMn₂O₆ (five samples), subjected to the high energy milling process with different milling time, i.e.: 0min, 5min, 10min, 15min and 30min, respectively. Fig. 2B shows the diagram representing the dependence of lattice parameters: *a, c* and average crystallite size of BaPrMn₂O₆ with respect to the time of the high energy milling process. In the diagram of Fig. 2B, one may observe a total disorder of the Ba-La sublattice after 30min of milling, whilst the samples milled for 5min, 10min, and 15 min, show a partial disorder of the Ba-Pr sublattice, which is visible as changes of the *a*/*c* ratio, approaching 1 for material with completely disordered Ba-Pr sublattice.

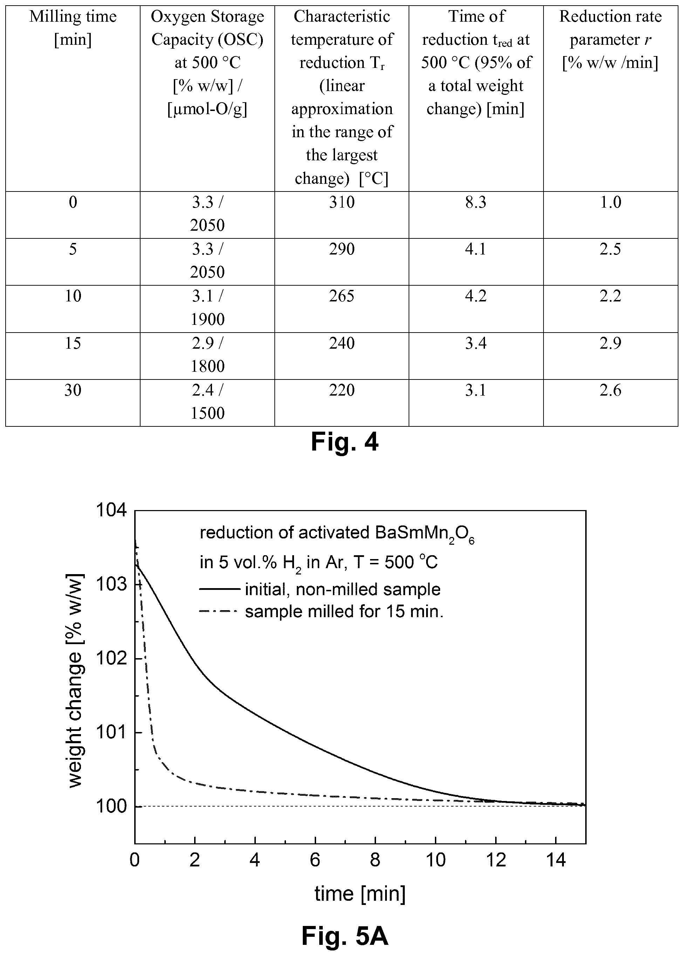

For the oxidized BaPrMn₂O₆ material, for all five samples (milled for: 0min, 5min, 10min, 15min and 30min), the thermogravimetric (TG) reduction curves (weight lost as a function of time) were registered - Fig. 3A. A thermogravimetric analysis of reduction process for each sample was performed under the atmosphere of 5vol.%H₂ in Ar, at a temperature of 500°C. On the obtained curves (Fig. 3A), one may observe considerable reduction of weight of milled samples within a relatively short time - in comparison with the non-milled sample (milling time = 0), which shows a relatively small decrease of the weight within the same time period. Therefore, the reduction parameters (i.e. reduction time and weight loss) depend on the time of the high energy milling process, namely: the longer time of milling, the shorter reduction time of the BaPrMn₂O₆ material. Other important reduction-related (i.e. concerning release of the oxygen from the sample) parameters are discussed in details with Fig. 4.

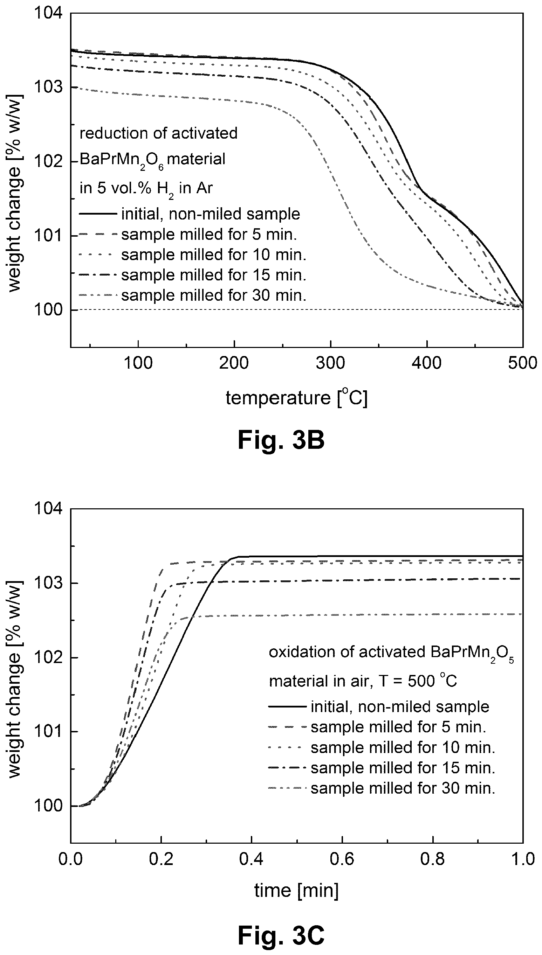

Fig. 3B shows TG curves taken for a BaPrMn₂O₆ reduction process that represent the weight loss of BaPrMn₂O₆ as a function of temperature, recorded during heating of the perovskite from the room temperature up to 500°C. A significant decrease of temperature, at which the reduction process begins (i.e. reduction curve shows significant weight loss) is observed for materials milled for longer times. Materials milled for 15min and 30min do not show inflection of the reduction TG curve, which results in a faster decrease of weight, important considering oxygen release properties. Moreover, the TG curves of Fig. 3B show that the milling time depends on the reduction process, namely: the longer milling time, the higher amount of the oxygen can be released from the material at lower temperatures, especially in 300-350°C temperature range.

Thermogravimetric analyses (of TG data) were further performed for the reduced material: BaPrMn₂O₅, for all five samples (milling time: 0min, 5min, 10min, 15min and 30min). The analyses were performed at 500°C under the atmosphere of synthetic air. Registered TG curves (weight increase as a function of time) are shown in Fig. 3C. As follows from the registered thermograms, shorter time of the oxidation process was registered for all milled samples, as compared with the non-milled sample.

Fig. 4 presents the table with collected oxygen storage-related data of BaPrMn₂O_{5+δ} calculated on the basis of the performed TG analyses. One may observe the difference with the value of reduction temperature (Tᵣ), which, for the non-milled sample, equals Tᵣ = 310°C and for the sample subjected to 5min of high energy milling equals Tᵣ = 290°C, and it further decreases, for the samples of longer milling time, down to the temperature of Tᵣ = 220°C for the sample milled for 30min. Likewise, the time of reduction (t_{red}) (provided for 95% of the total weight changes) at 500°C, equals t_{red} = 8.3min - for non-milled sample, where for the sample milled for 5min: t_{red} = 4.1min, and for the sample milled for 30min: t_{red} = 3.1, thereby providing the shortening of total reduction time by more than 50% for the samples subjected to the high energy milling process according to the invention.

Speed of reduction defined by reduction rate parameter *r* in [%w/w /min] units, described in T. Motohashi et al. ("Enhanced oxygen intake/release kinetics of BaYMn2O5+d fine powders prepared by a wet-chemical route", Journal of the Ceramics Society of Japan, 119 (2011) 894-897), and calculated for 50% of the total capacity equals 1.0 for the non-milled sample, and it reaches the maximum value for the sample milled for 15min., for which *r* equals to 2.9. The increase on the reduction rate parameter *r* indicates faster oxygen release and is an important parameter determining quality of the oxygen storage material.

Similar analysis was performed for the BaSmMn₂O_{5+δ} material synthesized by the soft chemistry method. At the initial step, stoichiometric amounts of respective nitrates, namely: 9.3070g of Sm(NO₃)₃·6H₂O, 5.4723g of Ba(NO₃)₂ and 10.5121g Mn(NO₃)₂·4H₂O were mixed and dissolved in a small amount of deionized water. 28.7495g of EDTA was dissolved in 25% ammonia solution and added to the solution of nitrates. All the following synthesis was conducted in the same manner as aforementioned BaPrMn₂O_{5+δ} synthesis.

After annealing, at 1100°C, of the BaSmMn₂O_{5+δ} precursor, the obtained double perovskite was slowly cooled in the furnace to the room temperature. Next, the perovskite pellets were crumbled and sieved through sieve with the apertures of 100 micrometers. Subsequently, the perovskite was split into two samples, where one sample was not subjected to the milling process (milling time = 0), and the remaining one was subsequently high energy milled for 15min. The high energy milling process was carried out in the rotary vibrating ball mill, with the milling chamber interior made of ZrO₂ and with the 875cpm (cycles per minute) speed, under air and at room temperature, and subsequently the samples were transferred into the thermogravimetric (TG) apparatus where they were heated up to 500°C with the heating rate of 10°/min., and when 500°C was reached, the samples were subjected to the activation process involving five consecutive, isothermal oxidation/reduction cycles, with rapid changes of gas atmosphere from 5vol.% of H₂ in Ar (during the reduction) into synthetic air (during the oxidation).

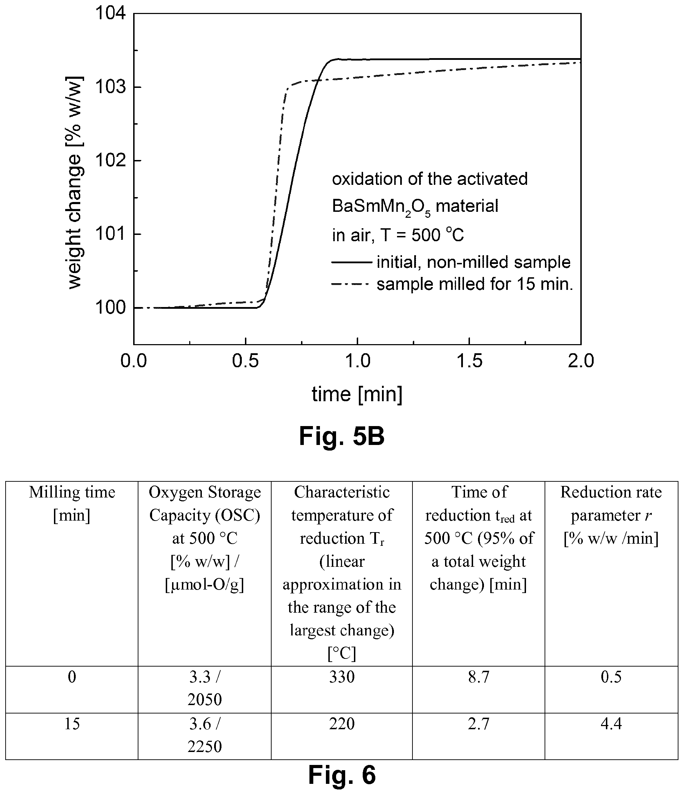

The oxidation/reduction properties of the obtained samples were subjected to the TG studies, where weight changes of the material were registered during oxidation and reduction processes, respectively. The registered thermograms are shown in Fig. 5A and 5B, and the data obtained on the basis of the TG curves are collected in the table of Fig. 6.

TG reduction analyses (Fig. 5A), for both samples, were performed in the atmosphere of 5vol.% of H₂ in Ar, at the temperature of 500°C. One may observe a significant change in loss of weight of the samples, with much faster changes occurring for the milled sample and larger total oxygen release amount. Similarly, visible changes in the oxidation parameters of the milled and non-milled samples may be observed when analyzing the TG oxidation curves of BaSmMn₂O₅ (Fig. 5B) conducted in air at 500°C. Concerning the increase of weight (oxygen incorporation to the material structure), the observed changes are much faster for the milled sample.

The characteristic reduction temperature (Tᵣ) of the milled sample equals 220°C, whilst the temperature of the non-milled sample equals 330°C (Fig. 6). Moreover, the time of reduction (tᵣ), as compared for the milled and non-milled samples, is shorten by 6 min for the milled one. Furthermore, oxygen storage capacity (OSC) increase by 0.3 %w/w for the milled and the reduction rate parameter *r* significantly increases from the 0.5 % w/w /min for the non-milled sample to 4.4 % w/w /min for the milled sample.

The obtained data showed that the process of high energy milling of perovskite-based oxygen storage materials of the general formula BaLnMn₂O_{5+δ} provides improvement of the oxidation/reduction properties of these materials, in particular, decline in reduction temperature (Tᵣ) and shortening of the reduction time (tᵣ) and increase of the reduction rate parameter (*r*)*,* thereby extending the temperature range of reversible oxygen absorption/release.

The obtained oxygen storage capacity (OSC) for the milled for 5min BaPrMn₂O_{5+δ} equals to 3.3% w/w, for the milled for 15min BaPrMn₂O_{5+δ} equals to 2.9% w/w and for the milled for 15min BaSmMn₂O_{5+δ} equals to 3.6% w/w. All these values exceed OSC of the commercial OSM materials from ceria-zirconia oxides (CeO₂-ZrO₂) or ceria-lanthana oxides (CeO₂-Ln₂O₃) systems.

The studies on reversible oxygen adsorption and release have revealed that the BaLnMn₂O_{5+δ} compound subjected to high energy milling shows reversible adsorption/release of about 1 mol of the oxygen per 1 mol of the compound at the temperature range of 200- 600°C, during change of the partial pressure of the oxygen in the range of p_{O2} = 10⁻¹⁶-0.21 oxygen atmosphere.

The high energy milling process, conducted in air, for 5 to 30min, provides partial or total distortion of the Ba-Ln sublattice and allows for activation of the surface of the perovskite-based material that improve the reversible oxygen adsorption/release properties of this group of oxides: BaLnMn₂O_{5+δ}.

The present method of modification of the Ba-Ln sublattice of BaLnMn₂O_{5+δ} perovskites simple, does not involve sophisticated laboratory equipment, only a simple planetary ball mill or a rotary vibrating ball mill, preferably having interior of its milling chamber made of ZrO₂.

## Claims

1. A method for preparation of a perovskite-based oxide of the chemical formula: BaLnMn₂O_{5+δ}, where Ln represents at least one element selected from the group consisting of: Ce, Pr, Nd, Pm, Sm, Eu, Gd, Tb, Dy, Ho, Er, Tm, Yb and Lu or a mixture of elements from the group consisting of: Ce, Pr, Nd, Pm, Sm, Eu, Gd, Tb, Dy, Ho, Er, Tm, Yb, Lu and Y, the method comprising synthesizing a perovskite precursor by a sol-gel method comprising the steps of: dissolving nitrates of respective elements in water, evaporating water to obtain a perovskite precursor, decompose excessive nitrates and oxidize carbon residues, grinding the perovskite precursor to a powdered perovskite precursor, annealing the powdered perovskite precursor in an atmosphere of 1vol.% of H₂ in Ar, at a temperature range from 1000 to 1100°C and cooling the obtained perovskite of the formula BaLaMn₂O_{5+δ}, wherein the method is **characterized in that** it further comprises the following steps: high energy milling of the obtained perovskite of the formula BaLaMn₂O_{5+δ} for 5 to 30 minutes, and activating of the material by consecutive isothermal oxidation/reduction at the temperature of 500°C in a reducing atmosphere of H₂ in Ar and in an oxidizing atmosphere of air.

2. The method according to claim 1, **characterized by** milling of the obtained perovskite in a rotary vibrating ball mill operating with a clamp speed of 500-1000cpm (cycles per minute) or in a planetary mill rotating with a speed from 300rpm to 800rpm (revolutions per minute).

3. The method according to claim 2, **characterized by** milling at the ratio of perovskite material to milling balls from 1:100 to 1:300.

4. The method according to claims 2 or 3, wherein the milling chamber used in the mill has its interior made of ZrO₂.

5. The method according to claim 1, **characterized by** carrying out the activation process in a thermogravimetric apparatus.

6. The method according to claim 1, **characterized by** carrying out the activation for a multiple, preferably five, oxidation/reduction cycles.

7. A oxygen storage perovskite-type metal oxide compound of a chemical formula: BaLnMn₂O_{5+δ}, where Ln represents at least one element selected from the group consisting of: Ce, Pr, Nd, Pm, Sm, Eu, Gd, Tb, Dy, Ho, Er, Tm, Yb and Lu or a mixture of elements from the group consisting of: Ce, Pr, Nd, Pm, Sm, Eu, Gd, Tb, Dy, Ho, Er, Tm, Yb, Lu and Y, **characterized in that** the material is high energy milled for a time from 5min to 30min and activated by consecutive isothermal oxidation/reduction cycles at a temperature of 500°C in a reducing atmosphere of H₂ in Ar and in an oxidizing atmosphere of air.

## Patentansprüche

1. Verfahren zur Herstellung eines Oxids auf Perowskitbasis mit der folgenden chemischen Formel:
BaLnMn₂O_{5+δ}, wobei Ln mindestens ein Element darstellt, das aus der Gruppe ausgewählt ist, bestehend aus:
Ce, Pr, Nd, Pm, Sm, Eu, Gd, Tb, Dy, Ho, Er, Tm, Yb und Lu oder einem Gemisch von Elementen aus der Gruppe, bestehend aus:
Ce, Pr, Nd, Pm, Sm, Eu, Gd, Tb, Dy, Ho, Er, Tm, Yb, Lu und Y, wobei das Verfahren das Synthetisieren eines Perowskitvorläufers durch ein Sol-Gel-Verfahren umfasst, das die folgenden Schritte umfasst:
Lösen von Nitraten von entsprechenden Elementen in Wasser, Verdampfen von Wasser, um einen Perowskitvorläufer zu erhalten, Zersetzen von überschüssigen Nitraten und Oxidieren von Kohlenstoffresten, Mahlen des Perowskitvorläufers zu einem pulverförmigen Perowskitvorläufer, Glühen des pulverförmigen Perowskitvorläufers in einer Atmosphäre von 1 Vol.-% von H₂ in Ar, in einem Temperaturbereich von 1000 bis 1100 °C und Abkühlen des erhaltenen Perowskits mit der Formel BaLaMn₂O_{5+δ}, wobei das Verfahren **dadurch gekennzeichnet ist, dass** es ferner die folgenden Schritte umfasst:
Hochenergiemahlen des erhaltenen Perowskits mit der Formel BaLaMn₂O_{5+δ} für 5 bis 30 Minuten und Aktivieren des Materials durch eine fortlaufende isotherme Oxidation/Reduktion bei der Temperatur von 500 °C in einer reduzierenden Atmosphäre von H₂ in Ar und in einer oxidierenden Atmosphäre von Luft.

2. Verfahren nach Anspruch 1, **gekennzeichnet durch** das Mahlen des erhaltenen Perowskits in einer drehenden Schwingmühle, die mit einer Klemmgeschwindigkeit von 500-1000 cpm (Zyklen pro Minute) betrieben wird oder in einer Planetenmühle, die sich mit einer Geschwindigkeit von 300 U/min bis 800 U/min (Umdrehungen pro Minute) dreht.

3. Verfahren nach Anspruch 2, **gekennzeichnet durch** das Mahlen mit einem Verhältnis von Perowskitmaterial zu Mahlkugeln von 1:100 bis 1:300.

4. Verfahren nach Anspruch 2 oder 3, wobei das Innere der in der Mühle verwendeten Mahlkammer aus ZrO₂ besteht.

5. Verfahren nach Anspruch 1, **gekennzeichnet durch** das Ausführen des Aktivierungsprozesses in einem thermogravimetrischen Gerät.

6. Verfahren nach Anspruch 1, **gekennzeichnet durch** das Ausführen der Aktivierung für mehrere, vorzugsweise fünf, Oxidations-/Reduktionszyklen.

7. Sauerstoff speichernde Metalloxidverbindung vom Perowskittyp mit der folgenden chemischen Formel:
BaLnMn₂O_{5+δ}, wobei Ln mindestens ein Element darstellt, das aus der Gruppe ausgewählt ist, bestehend aus:
Ce, Pr, Nd, Pm, Sm, Eu, Gd, Tb, Dy, Ho, Er, Tm, Yb und Lu oder einem Gemisch von Elementen aus der Gruppe, bestehend aus:
Ce, Pr, Nd, Pm, Sm, Eu, Gd, Tb, Dy, Ho, Er, Tm, Yb, Lu und Y, **dadurch gekennzeichnet, dass** das Material mit einer hohen Energie für eine Dauer von 5 min bis 30 min gemahlen und durch fortlaufende Zyklen der isothermen Oxidation/Reduktion bei einer Temperatur von 500 °C in einer reduzierenden Atmosphäre von H₂ in Ar und in einer oxidierenden Atmosphäre von Luft aktiviert wird.

## Revendications

1. Procédé de préparation d'un oxyde à base de pérovskite de formule chimique :
BaLnMn₂O_{5+δ}, où Ln représente au moins un élément choisi dans le groupe constitué de :
Ce, Pr, Nd, Pm, Sm, Eu, Gd, Tb, Dy, Ho, Er, Tm, Yb et Lu ou un mélange d'éléments du groupe constitué de : Ce, Pr, Nd, Pm, Sm, Eu, Gd, Tb, Dy, Ho, Er, Tm, Yb, Lu et Y, le procédé comprenant la synthèse d'un précurseur de pérovskite par un procédé sol-gel comprenant les étapes consistant à : dissoudre les nitrates des éléments respectifs dans l'eau, évaporer l'eau pour obtenir un précurseur de pérovskite, décomposer les nitrates en excès et oxyder les résidus de carbone, broyer le précurseur de pérovskite en un précurseur de pérovskite en poudre, recuire le précurseur de pérovskite en poudre sous une atmosphère de 1 % en volume de H₂ dans Ar, dans une plage de températures allant de 1 000 à 1 100 °C et refroidir la pérovskite obtenue de formule BaLaMn₂O_{5+δ}, le procédé étant **caractérisé en ce qu'**il comprend en outre les étapes suivantes : broyage à haute énergie de la pérovskite obtenue de formule BaLaMn₂O_{5+δ} pendant 5 à 30 minutes, et activation du matériau par une oxydation/réduction isotherme consécutive à la température de 500 °C sous une atmosphère réductrice de H₂ dans Ar et sous une atmosphère oxydante d'air.

2. Procédé selon la revendication 1, **caractérisé par** le broyage de la pérovskite obtenue dans un broyeur à boulets vibrant rotatif fonctionnant à une vitesse de serrage allant de 500 à 1 000 cpm (cycles par minute) ou dans un broyeur planétaire tournant à une vitesse allant de 300 tr/min à 800 tr/min (tours par minute).

3. Procédé selon la revendication 2, **caractérisé par** le broyage au rapport du matériau de pérovskite aux boulets de broyage compris entre 1/100 et 1/300.

4. Procédé selon la revendication 2 ou la revendication 3, dans lequel la chambre de broyage utilisée dans le broyeur a son intérieur en ZrO₂.

5. Procédé selon la revendication 1, **caractérisé par** l'exécution du processus d'activation dans un appareil de thermogravimétrie.

6. Procédé selon la revendication 1, **caractérisé par** la réalisation de l'activation pendant plusieurs cycles d'oxydation/réduction, de préférence cinq cycles.

7. Composé d'oxyde métallique de type pérovskite de stockage d'oxygène de formule chimique : BaLnMn₂O_{5+δ}, où Ln représente au moins un élément choisi dans le groupe constitué de : Ce, Pr, Nd, Pm, Sm, Eu, Gd, Tb, Dy, Ho, Er, Tm, Yb et Lu ou un mélange d'éléments du groupe constitué de : Ce, Pr, Nd, Pm, Sm, Eu, Gd, Tb, Dy, Ho, Er, Tm, Yb, Lu et Y, **caractérisé en ce que** le matériau est broyé à haute énergie pendant un temps allant de 5 min à 30 min et activé par des cycles d'oxydation/réduction isotherme consécutifs à une température de 500 °C sous une atmosphère réductrice de H₂ dans Ar et sous une atmosphère oxydante d'air.
